# EUROPÄISCHE PATENTSCHRIFT

(11) **EP 4 074 628 B1**
(45) Veröffentlichungstag und Bekanntmachung des Hinweises auf die Patenterteilung: **28.01.2026**
(21) Anmeldenummer: 21168917.9
(22) Anmeldetag: 16.04.2021
(51) Int. Cl.: B65G 9/00, B65G 17/20

(54) **TASCHE FÜR EINEN HÄNGEFÖRDERER SOWIE EINE ENTSPRECHENDE ANORDNUNG**
POCKET FOR A SUSPENSION CONVEYOR AND CORRESPONDING ARRANGEMENT
SAC POUR UN CONVOYEUR AÉRIEN, AINSI QUE DISPOSITIF CORRESPONDANT

(43) Veröffentlichungstag der Anmeldung: 19.10.2022
(60) Teilanmeldung: 25217898.3
(73) Patentinhaber: BEUMER Group GmbH & Co. KG, 59269 Beckum (DE)
(72) Erfinder: Neugebauer, Jürgen, 8102 Semraich (AT)
(74) Vertreter: Novagraaf Group

(56) Entgegenhaltungen:
- EP-A1- 2 130 968
- EP-A1- 2 436 280
- EP-A1- 2 792 620
- WO-A1-2020/104830
- DE-A1- 102005 056 428
- DE-A1- 102013 203 844
- DE-U1- 202010 010 300
- DE-U1- 202019 103 850
- US-A- 3 468 576
- US-A- 3 790 197
- US-A1- 2008 061 565
- US-A1- 2019 166 936
- US-A1- 2020 130 952

## Beschreibung

Die Erfindung geht aus von einer Tasche für einen Hängeförderer, wobei die Tasche zwei Seitenwände aufweist, die an einem Taschenboden lösbar miteinander verbunden sind, wobei die Seitenwände an dem Taschenboden jeweils mindestens ein magnetisches Element aufweisen, die einander anziehen, wobei das magnetische Element einer ersten der beiden Seitenwände ein Permanentmagnet und das magnetische Element einer zweiten der beiden Seitenwände ein ferromagnetisches Metall oder ein Permanentmagnet mit in Bezug auf den Permanentmagnet der ersten der beiden Seitenwände entgegengesetzter Polung ist, wobei der Taschenboden von einer Kupplung gebildet ist, mit der die Seitenwände lösbar miteinander verbunden sind, wobei jede Seitenwand eine von zwei Kupplungshälften der Kupplung aufweist.

Aus der DE 20 2019 103 850 U1, welche eine Tasche nach dem Oberbegriff des Anspruchs 1 offenbart, ist eine Transporttasche für eine Fördervorrichtung bekannt, wobei die Tasche eine erste und eine zweite Taschenwand aufweist, wobei an einem unteren Ende der Taschenwände jeweils reversibel aneinander koppelbare Schließelemente angeordnet sind, mit denen die unteren Enden der Taschenwände zu einem Taschenboden miteinander verbindbar sind.

Eine weitere Tasche ist aus der EP 2 130 968 B1 bekannt. Die Tasche weist eine Tragewand auf, die in einem oberen Bereich mit einem Haken und einem schwenkbaren Bügel versehen ist sowie mit einer zumindest im unteren Bereich flexiblen Boden-Seitenwand, die in ihrem oberen Bereich mit dem schwenkbaren Bügel verbunden ist. Die Tragewand weist in einem unteren Bereich eine Kupplung sowie eine Stellmechanik zur Betätigung der Kupplung und in einem davon beabstandeten oberen Bereich nahe einer Einfüllöffnung der Tasche Mittel zum Betätigen der Stellmechanik, mithin zum Öffnen der Kupplung und zum Schließen der Kupplung auf.

Die EP 2 708 478 B1 beschreibt eine Tasche für einen Hängeförderer für den hängenden Transport von Objekten, aufweisend einen Halterahmen, einen Taschenbeutel, der am Halterahmen hängt und von dem zu transportierende Objekte aufnehmbar sind, und ein Aufhängeelement, welches mit dem Halterahmen verbunden ist und mittels dessen die Tragetasche an die Hängefördervorrichtung anhängbar ist, um von der Hängefördervorrichtung hängend transportiert zu werden. Der Taschenbeutel weist eine erste und eine zweite Seitenwand aufweist, die jeweils einen mit dem Halterahmen verbundenen, ersten Endabschnitt und einen vom Halterahmen abgewandten, zweiten Endabschnitt aufweisen, wobei die zweiten Beutelendabschnitte über einen Gelenkmechanismus miteinander verbunden sind, welcher in eine Entladestellung bringbar ist, in welcher die zweiten Beutelendabschnitte in einem Abstand voneinander angeordnet sind, sodass der Taschenbeutel zur Abgabe von Objekten mit einer zwischen den zweiten Beutelendabschnitten gebildeten Auslassöffnung versehen ist, und welcher in eine Beladestellung bringbar ist, in welcher die zweiten Beutelendabschnitte zueinander benachbart angeordnet sind, sodass die Auslassöffnung geschlossen ist und der Taschenbeutel Objekte aufnehmen kann.

Eine ähnliche Tasche ist auch in der WO 2018/078098 A1 beschrieben. Ein Hängeförderer mit einer Entladestation für die automatisierte Entladung einer Tasche ist in der US 10,040,641 B2 beschrieben. Ein weiterer Hängeförderer für Taschen ist aus der WO 2020/128941 A1 bekannt. Aus den Druckschriften US 2019/166936 A1, DE 10 2005 056 428 A1 und WO 2020/104830 A1 sind verschiedentlich ausgebildete Magnetverschlüsse bekannt.

Die aus dem Stand der Technik bekannten Taschen haben den Nachteil, dass sie nur bedingt für die automatisierte Entladung geeignet sind oder hinsichtlich zumindest ihrer Stellmechanik und ihres sonstigen konstruktiven Aufbaus vergleichsweise aufwendig und damit fehleranfällig sowie kostenintensiv ausgebildet sind. Des Weiteren sind die aus dem Stand der Technik bekannten Taschen nur unzureichend dazu vorbereitet, nach dem Öffnen im Zuge des Entladevorgang selbsttätig wieder geschlossen zu werden, um einem weiteren Be- und Entladezyklus zugeführt zu werden.

Es ist daher die Aufgabe der Erfindung, eine Tasche der eingangs beschriebenen Art derart weiterzuentwickeln, dass sie mit einfachen technischen Mitteln für die automatisierte Entladung geeignet ist.

Diese Aufgabe wird durch eine Tasche mit den Merkmalen des Anspruchs 1 gelöst. Der nebengeordnete Anspruch 12 beschreibt eine entsprechende Anordnung aus einer solchen Tasche sowie einem Taschenmitnehmer. Beispielhafte Ausführungsformen sind Gegenstand der abhängigen Ansprüche.

Demgemäß ist bei der Tasche vorgesehen, dass die Tasche ferner eine Stellmechanik aufweist, über welche die Kupplung zwischen einer Verriegelungsposition, in der die Kupplungshälften aneinander festgelegt sind, und einer Auslöseposition, in der die Kupplungshälften voneinander gelöst sind, verstellbar ist, wobei die Kupplungshälften jeweils mindestens eines der magnetischen Elemente aufweisen, wobei die magnetischen Elemente über die Stellmechanik relativ zueinander verstellbar und in der Verriegelungsposition relativ zu der Auslöseposition weiter einander angenähert sind, wobei die Stellmechanik mindestens einen Magnetschieber aufweist, an dem das mindestens eine magnetische Element, vorzugsweise ein Permanentmagnet, einer der beiden Kupplungshälften angeordnet ist, wobei mit dem Magnetschieber ein Abstand dieses magnetischen Elements in Bezug auf das mindestens eine magnetische Element der anderen Kupplungshälfte verstellbar ist. Zumindest die den Magnetschieber aufweisende Kupplungshälfte erstreckt sich entlang der Breite des Taschenbodens. Die Breite der Tasche kann dabei horizontal und im Wesentlichen senkrecht zur Förderrichtung der Tasche entlang einer Förderstrecke eines Hängeförderers ausgerichtet sein. Der Magnetschieber steht in der Breitenrichtung mit einem Betätigungsende aus der Kupplungshälfte vor. Zumindest die den Magnetschieber aufweisende Kupplungshälfte erstreckt sich entlang der Breite des Taschenbodens. Die Erfindung macht sich somit die selbstzentrierende Funktion magnetischer Felder zu Nutze.

Durch ein Verlagern der magnetischen Elemente zwischen der Verriegelungsposition und der Auslöseposition durch Betätigen der Stellmechanik kann das zwischen den magnetischen Elementen der beiden Kupplungshälften wirkende magnetische Feld variieren und damit eine Anziehungskraft zwischen den Kupplungshälften eingestellt werden. So können die magnetischen Elemente der beiden Kupplungshälften in der Auslöseposition so weit voneinander beabstandet sein, dass eine magnetische Anziehungskraft zwischen den beiden Kupplungshälften so weit herabgesetzt ist, dass die Kupplungshälften bereits aufgrund einer auf sie einwirkenden Schwerkraft aufgrund des Eigengewichts der Kupplungshälften bzw. aufgrund von auf die Seitenwände wirkenden Horizontalkräften aufgrund in der Tasche aufgenommener Gegenstände voneinander abgelöst werden.

Ebenso kann beim Entladevorgang vorgesehen sein, dass in einer Entladestation die in Förderrichtung nachlaufende der beiden Kupplungshälften bzw. die zugehörige Seitenwand festgehalten wird, während der Carrier, an dem die Tasche hängt, von dem Hängeförderer weitertransportiert wird, sodass sich die nicht fixierte, Förderrichtung vordere Seitenwand von der fixierten, hinteren Seitenwand ablöst. Demgemäß können sie Seitenwände insbesondere vertikale und gegenüberliegende Seitenwände sein, die vorzugsweise zumindest bei einem Entladevorgang senkreckt zur Förderrichtung ausgerichtet sind.

In der Verrieglungsposition können die beiden magnetischen Elemente so weit einander angenähert sein, dass zwischen den Kupplungshälften eine Haltekraft wirkt, welche zumindest ausreichend ist, ein voneinander Ablösen der Kupplungshälften beispielsweise aufgrund eines in der Tasche aufgenommenen Gegenstands, welcher gegen die gegenüberliegenden Seitenwände der Tasche drückt, standhalten kann. Die Haltekraft kann durch Auslegung der magnetischen Elemente eingestellt werden. Die magnetischen Elemente können zumindest teilweise als Permanentmagnete ausgebildet sein. Die magnetischen Elemente können jedoch teilweise in Form eines ferromagnetischen Metalls bereitgestellt sein. So kann beispielsweise vorgesehen sein, dass bei einer Paarung aus einem Permanentmagneten und einem ferromagnetischen Metall eine der beiden Kupplungshälften den Permanentmagneten und die andere das ferromagnetische Metall aufweist.

Aufgrund der selbstzentrierenden Funktion magnetischer Felder können die beiden Kupplungshälften, nachdem diese durch den Entladevorgang voneinander gelöst worden sind, selbsttätig wieder zueinander finden und die Verrieglungsposition einnehmen. Die Kupplungshälften können an aneinandergrenzenden Flächen komplementäre Formschlusskonturen aufweisen, die die Positionierung der Kupplungshälften zueinander unterstützten.

Demgemäß kann das magnetische Element einer ersten der beiden Kupplungshälften ein Permanentmagnet und das magnetische Element einer zweiten der beiden Kupplungshälften ein ferromagnetisches Metall oder ein Permanentmagnet mit in Bezug auf den Permanentmagnet der ersten der beiden Kupplungshälften entgegengesetzter Polung sein.

Es kann vorgesehen sein, dass die Kupplungshälften jeweils mindestens ein magnetisches Element, vorzugsweise einen Permanentmagnet aufweisen, die gleich gepolt und in der Auslöseposition relativ zu der Verrieglungsposition weiter einander angenähert und vorzugsweise mit ihren gleichen Polen sich gegenüberstehend angeordnet sind. Diese Ausführungsform hat insbesondere den Vorteil, dass die voneinander Ablösung der Kupplungshälften in der Auslöseposition der Stellmechanik aufgrund der auf sie einwirkenden magnetischen Abstoßung gefördert wird. Dies ist insbesondere für Anwendungen vorteilhaft, bei denen beispielsweise der in der Tasche aufgenommene Gegenstand vergleichsweise kleine Abmessungen und/oder ein geringes Gewicht aufweist, so dass eine ausreichende Gewichtskraft auf die Kupplung bzw. eine ausreichende horizontale Trennkraft auf die gegenüberliegenden Innenseiten der Seitenwände, die die Ablösung der Kupplungshälften in der Auslöseposition befördern, nicht vorliegt.

Beispielsweise kann der Magnetschieber Bestandteil einer der beiden Kupplungshälften sein. So kann das magnetische Element mit dem Magnetschieber in der Verrieglungsposition der Stellenmechanik die beiden magnetischen Elemente der beiden Kupplungshälften mit ihren entgegengesetzten Polen maximal angenähert haben, beispielsweise in die Flucht gebracht haben, sodass eine maximale Anziehungskraft zwischen den magnetischen Elementen der beiden Kupplungshälften bereitgestellt ist.

In der Auslöseposition kann der Magnetschieber das ihm zugeordnete magnetische Element lateral in Bezug auf das magnetische Element der anderen Kupplungshälfte verlagert haben, mithin senkrecht zur Erstreckungsrichtung der Magnetfeldlinien, wenn sich die beiden magnetischen Elemente der beiden Kupplungshälften mit ihren Polen in der Flucht befinden und zumindest in erster Näherung die Magnetfeldlinien senkrecht zu den Polflächen auf kürzestem Wege zwischen den magnetischen Elementen geführt sind.

Bei dieser Ausrichtung und Verlagerung der magnetischen Elemente der beiden Kupplungshälften kann bereits eine vergleichsweise geringe laterale Verlagerung der magnetischen Elemente zueinander ausreichend sein, um die magnetische Anziehungskraft zwischen den in der Verrieglungsposition einander angenäherten magnetischen Elemente soweit herabzusetzen, dass die beiden Kupplungshälften aufgrund ihrer eigenen Schwerkraft voneinander abgelöst werden.

Die schwerkraftgetriebene Ablösung der beiden Kupplungshälften in der Auslöseposition voneinander kann durch eine unter einem Winkel zur vertikal verlaufenden Einlaufschräge, entlang welcher die Kupplungshälften in der Verrieglungsposition aneinander liegen, befördert werden.

Der Magnetschieber kann weiterhin einen Haken oder eine zu dem Haken komplementäre hinterschnittige Hakenaufnahme aufweisen, der/die mit dem Magnetschieber zwischen der Verrieglungsposition und der Auslöseposition verstellbar ist. Je nachdem, ob der Magnetscheiber den Haken oder die komplementäre hinterschnittige Aufnahme aufweist, kann die nicht den Magnetschieber aufweisende Kupplungshälfte das jeweils andere Bauteil von Haken und Hakenaufnahme aufweisen. Nach dem Prinzip der kinematischen Umkehr ist es irrelevant, ob der Magnetschieber den Haken und die gegenüberliegende Kupplungshälfte die Hakenaufnahme aufweist oder umgekehrt.

Die Breite der Tasche kann dabei horizontal und im Wesentlichen senkrecht zur Förderrichtung der Tasche entlang einer Förderstrecke eines Hängeförderers ausgerichtet sein. Durch Betätigen des Magnetschiebers über das Betätigungsende kann der Magnetschieber in der Breitenrichtung verlagert werden. Durch das Verlagern kann der Stellmechanismus aus der Verrieglungsposition in die Auslöseposition verlagert werden. Der Stellmechanismus, insbesondere der Magnetscheiber kann von einer mechanischen Vorspannung, beispielsweise mithilfe einer Spiralfeder, aus der Auslöseposition in Richtung der Verrieglungsposition vorgespannt sein, sodass bei nicht betätigtem Magnetschieber, insbesondere bei freier Anordnung des Betätigungsendes der Stellmechanismus und mit ihm insbesondere der Magnetschieber in der Verrieglungsposition angeordnet ist.

Das Betätigungsende des Magnetschiebers kann eine Anlaufkontur aufweisen, die entgegen einer vorgesehenen Förderrichtung der Tasche ansteigt.

Der Haken und die komplementäre hinterschnittige Hakenaufnahme können in der Verrieglungsposition zusätzlich zu der Haltekraft der einander angenäherten magnetischen Elemente der beiden Kupplungshälften eine zusätzliche kraftschlüssige Verbindung zwischen den beiden Kupplungshälften bereitstellen. Mit dem Betätigen des Magnetschiebers, bei dem die beiden sich anziehenden ferromagnetischen Elemente der beiden Kupplungshälften weiter beabstandet werden, sodass sich eine magnetische Anziehungskraft zwischen den magnetischen Elementen verringert, kann auch der Haken aus der hinterschnittigen Hakenaufnahme herausgelöst werden. Dazu kann eines von Haken und hinterschnittiger Hakenaufnahme Bestandteil des Magnetschiebers sein oder von diesem angetrieben sein, sodass gleichzeitig mit dem Verlagern der magnetischen Elemente relativ zueinander auch der Haken und die Hakenaufnahme relativ zueinander verlagert werden. Dasjenige Element von Haken und Hakenaufnahme, welches nicht Bestandteil des Magnetschiebers oder von diesem angetrieben ist, kann mit der Kupplungshälfte starr verbunden sein, die nicht den Magnetschieber aufweist.

Nach dem Ablösen der beiden Kupplungshälften voneinander und nach dem Freilassen des Betätigungsendes kann der Magnetscheiber aufgrund einer Rückstellkraft einer beispielsweise mithilfe einer Spiralfeder bereitgestellten mechanischen Vorspannung aus der Auslöseposition in die Verrieglungsposition zurückgeführt werden. Werden nun die beiden Kupplungshälften wieder einander angenähert, beispielsweise weil sie aufgrund der Schwerkraft und der biegeschlaffen Eigenschaften der Seitenwände der Tasche nach dem Entladen im Wesentlichen senkrecht herunterhängen und so bereits eine erste Annährung aneinander erfahren haben, kann aufgrund der selbstausrichtenden Wirkung der magnetischen Elemente der beiden Kupplungshälften eine weitere Annährung der Kupplungshälften so weit folgen, bis der Haken an eine Berandung eines Hinterschnitts der hinterschnittigen Hakenaufnahme zur Anlage kommt. Die zwischen den beiden Kupplungshälften wirkende magnetische Anziehungskraft kann groß genug sein, um unter Überwindung der mechanischen Vorspannung eine Verlagerung von Haken und Hakenaufnahme zueinander zumindest insoweit zu bewirken, dass der Haken den Hinterschnitt hintergreifen und damit in die Hakenaufnahme eingreifen kann. Um dies zu befördern, kann an einer der Hakenaufnahme zugewandten Stirnseite des Hakens, mit der der Haken beim Annähern als Erstes auf den Hinterschnitt trifft, eine Anlaufschräge ausgebildet sein, welche unter einem spitzen Winkel zu einer linearen Verstellrichtung des Magnetschiebers zwischen der Verrieglungsposition und der Auslöseposition verläuft. Alternativ oder zusätzlich kann der Hinterschnitt der hinterschnittigen Hakenaufnahme an seiner dem Haken zugewandten Außenseite eine entsprechende Anlaufschräge aufweisen.

Der Magnetscheiber kann in einem Gehäuse der den Magnetschieber aufweisenden Kupplungshälfte aufgenommen sein und zumindest anteilig zu einer Formschlussaufnahme zur Aufnahme der anderen Kupplungshälfte hin freiliegen. Beispielsweise können das Gehäuse der Kupplungshälften und/oder der Magnetschieber als Spritzgussformteile aus einem Kunststoffmaterial ausgebildet sein. Dadurch, dass der Magnetschieber zu der Formschlussaufnahme hin freiliegt, kann in der Verrieglungsposition, bei der die beiden Kupplungshälften maximal einander angenähert sind, eine maximale Annäherung zwischen den magnetischen Elementen der beiden Kupplungshälften und damit eine maximale Anziehungskraft und damit Belastbarkeit der Kupplung durch Schwebegegenstände in der Tasche gewährleistet sein.

Der Magnetschieber kann die Formschlussaufnahme in Bezug auf eine Einsteckrichtung der anderen Kupplungshälfte in die Formschlussaufnahme an einem rückwärtigen Ende der Formschlussaufnahme begrenzen, sodass die andere Kupplungshälfte in ihrer vollständig in die Formschlussaufnahme eingesetzten Position dem Magnetscheiber maximal angenähert ist.

Die Stellmechanik, vorzugsweise ein Magnetscheiber der Stellenmechanik, an dem das mindestens eine magnetische Element einer der beiden Kupplungshälften angeordnet ist, kann in der Auslöseposition eine mechanische Vorspannung in Richtung der Verrieglungsposition aufweisen. Für die Bereitstellung der Vorspannung kann eine Spiralfeder vorgesehen sein, die beispielsweise auf den Magnetschieber wirkt und den Magnetschieber in Richtung der Verriegelungsposition, bei der der Schieber maximal aus dem Gehäuse der ihm zugeordneten Kupplungshälfte herausragt, vorspannt.

Die Kupplungshälften können sich für die Bereitstellung des Formschlusses im Wesentlichen über die gesamte Breite des Taschenbodens erstrecken und die Stellmechanik einschließlich eines Betätigungsendes, mit dem der Magnetscheiber in der Breiterichtung aus der Kupplungshälfte vorsteht, in der Breitenrichtung überragen, sodass an einer dem Betätigungsende zugewandten Unterseite des Formschlussabschnitts einer Auflageseite für die Kupplung geschaffen ist. Über die Auflageseite kann die Kupplung beispielsweise auf einer Rampe einer Entladestation zur Auflage kommen, sodass die Kupplung entlang der Rampe einer sich entlang der Förderrichtung in horizontaler Breitenrichtung verjüngenden Taschenführung der Entladestation zugeführt werden kann, durch welche die Kupplung mit dem Betätigungsende durchgeführt wird, wobei die Taschenführung an dem Betätigungsende angreift und aufgrund der sich verjüngenden Geometrie der Taschenführung das Betätigungsende betätigt, sodass die Kupplung aus der Verrieglungsposition in die Auslöseposition überführt wird.

Gemäß einem anderen Aspekt nach Anspruch 12 wird einer Anordnung aus einer Taschen der zuvor beschriebenen Art und einem Taschenmitnehmer beschrieben, wobei das mindestens eine magnetische Element einer der beiden Kupplungshälften ein Permanentmagnet ist, der mit seinem Pol, mit dem er von dem magnetischen Element der anderen Kupplungshälfte abgewandt ist, einer Gehäuseaußenseite der ihm zugeordneten Kupplungshälfte zugewandt ist, sodass über einen an der Gehäuseaußenseite angekoppelten magnetischen Taschenmitnehmer die Tasche angetrieben werden kann. Der Taschenmitnehmer kann beispielsweise Bestandteil einer Entladestation eines Hängeförderers sein, wobei die Entladestation dazu eingerichtet sein kann, durch vollautomatisiertes Betätigen der Stellmechanik der Kupplung die vollautomatisierte Entladung der Tasche zu realisieren.

Der Taschenmitnehmer kann Bestandteil einer Entladestation eines Hängeförderers sein, wobei der Entladestation mindestens eine an einer Förderschiene des Hängeförderers hängende Tasche zugeführt ist. Die Entladestation kann eine sich entlang der Förderrichtung in Breitenrichtung verjüngende Taschenführung aufweisen, durch welche die Kupplung mit dem Betätigungsende hindurch geführt ist und die an dem Betätigungsende angreift.

Die Taschenführung kann ein statisches oder ein dynamisches Bauteil sein. Die Taschenführung kann beispielsweise ein Paar sich gegenüberstehender Führungswände aufweisen, die zwischen sich einen Führungsspalt ausbilden, welcher in der Förderrichtung die beschriebene Verjüngung aufweist. Die Taschenführung kann alternativ oder zusätzlich eine angetriebene Nockenscheibe mit vertikaler Rotationsachse aufweisen. Die Taschenführung kann ein Paar sich gegenüberstehender Nockenscheiben aufweisen, die gegenläufig angetrieben sind und zwischen sich einen Spalt mit der beschriebenen Verjüngung aufweisen. In dem Fall, dass lediglich eine Nockenscheibe mit vertikaler Rotationsachse vorgesehen ist, kann eine der Nockenscheibe gegenüberstehende vertikale Wand vorgesehen sein, sodass zwischen der Nockenscheibe und der gegenüberstehenden, vertikalen Wand in der Förderrichtung die beschriebene Verjüngung bereitgestellt ist.

Die Taschenführung kann gegenüberliegende Anfahrwände aufweisen, die sich in Förderrichtung von einem ersten Abstand auf einen zweiten Abstand einander annähern, wobei der erste Abstand größer als eine sich zwischen den gegenüberliegenden Anfahrwänden erstreckende Breite der Kupplung einschließlich des mindestens einen Betätigungsendes ist, wenn sich der Schieber der Stellmechanik in einer Verriegelungsposition der Kupplung befindet, und wobei der zweite Abstand einer Breite der Kupplung einschließlich des mindestens einen Betätigungsendes entspricht, wenn sich der Schieber der Stellmechanik in einer weiter über die Stirnseite in die Kupplung eingeschobenen Auslöseposition der Kupplung befindet.

Demgemäß kann der Taschenmitnehmer an der Kupplung angreifen und die Kupplung in der Förderrichtung antreiben, wobei der Taschenmitnehmer die Kupplung in der Förderrichtung vorzugsweise mindestens mit einer Geschwindigkeit antreibt, die einer Vorschubgeschwindigkeit der Förderschiene entspricht, wobei die Geschwindigkeit des Taschenmitnehmers besonders bevorzugt höher als die Vorschubgeschwindigkeit ist.

Der Taschenmitnehmer kann magnetische Mitnehmerelemente aufweisen, die einzeln oder paarweise an magnetischen Elementen der Kupplung gekoppelt sind. Die magnetischen Mitnehmerelemente können paarweise gleichlaufend und fluchtend von dem Taschenmitnehmer angetrieben sein. Die paarweise gleichlaufend und fluchtend angetriebenen magnetischen Mitnehmerelemente können am Außenumfang zweier umlaufender Ketten, Riemen oder Bänder angeordnet sein.

Die magnetischen Elemente der Kupplung können dieselben magnetischen Elemente sein, mit denen die Kupplung in einer Verriegelungsposition zweier Kupplungshälften der Kupplung, in der die Kupplungshälften aneinander festgelegt sind, gehalten werden. Dabei können die magnetischen Elemente der Kupplung Permanentmagnete sein, die mit einem ersten ihrer beiden Pole eine magnetische Anziehungskraft zwischen den Kupplungshälften bereitstellen und mit einem zweiten ihrer Pole, mit dem die magnetischen Elemente der Kupplung einem der magnetischen Mitnehmerelemente zugewandt sind, mit dem magnetischen Mitnehmerelement gekoppelt sein.

Die Förderschiene kann horizontal geführt und dementsprechend die Tasche der Entladestation in horizontaler Förderrichtung zugeführt sein, wobei der Taschenmitnehmer mit seinen Mitnehmerelementen unter einem ansteigenden spitzen Winkel der Kupplung zugeführt ist.

Die Kupplung der Tasche kann von dem Taschenmitnehmer eine ansteigende Rampe der Entladestation herauf gefördert sein, sodass der Taschenboden mit der Kupplung auf der Rampe abgestützt ist. Die Rampe, ein sich in der Förderrichtung an die Rampe anschließendes Plateau oder eine sich an die ansteigende Rampe oder das Plateau anschließende abfallende Rutsche kann zumindest teilweise zwischen gegenüberliegenden Anfahrwänden der sich verjüngenden Taschenführung angeordnet sein.

In Förderrichtung anschließend an eine Auslöseposition der Entladestation, bei der gegenüberliegende Anfahrwände der Taschenführung für die Kupplungsauslösung maximal einander angenähert sind, kann die Abstützung des Taschenbodens durch die Rampe und/oder ein sich an die Rampe anschließendes Plateau unterbrochen ist, beispielsweise indem die Rampe oder das Plateau in eine abfallende Rutsche übergeht.

Die Rampe und/oder das Plateau können von mindestens einer umlaufenden Kette, von mindestens einem umlaufenden Riemen oder von mindestens einem umlaufenden Band, an deren jeweiliger der Kupplung zugewandter Außenseite die magnetischen Mitnehmerelemente angeordnet sind, bereitgestellt sein.

Zumindest die sich in Förderrichtung verjüngende Taschenführung und vorzugsweise weiterhin ein Taschenmitnehmer, der an der Kupplung angreift und die Kupplung in der Förderrichtung antreibt, können an einem um eine horizontale Achse verschwenkbaren Schwenkrahmen der Entladestation angeordnet sein, wobei die Taschenführung unter einem Abstand zu der Schwenkachse angeordnet ist, sodass der Abstand der Taschenführung zu der Förderschiene einstellbar ist.

Weitere Einzelheiten der Erfindung werden anhand der nachstehenden Figuren erläutert. Dabei zeigt:
- Figur 1: in schematischer Darstellung eine beispielhafte Ausführungsform eines Hängeförderers gemäß dem Stand der Technik;
- Figur 2: eine Schnittansicht eines Details einer beispielhaften Ausführungsform einer Kupplung in der Verrieglungsposition;
- Figur 3a: die Ausführungsform gemäß Figur 2 in der Auslöseposition des Stellmechanismus;
- Figur 3b: die Ausführungsform gemäß Figur 3a mit voneinander abgelösten Kupplungshälften;
- Figur 4a: die Ausführungsform gemäß Figur 3b mit dem Stellmechanismus in der Verrieglungsposition;
- Figur 4b: die Ausführungsform gemäß Figur 4a mit teilweise einander angenäherten Kupplungshälften;
- Figur 4c: die Ausführungsform gemäß Figur 4b mit vollständig einander angenäherten Kupplungshälften;
- Figur 5: in perspektivischer Darstellung eine beispielhafte Ausführungsform für eine Entladestation;
- Figur 6: eine Detailansicht der Entladestation gemäß Figur 5 mit einer Kupplung;
- Figur 7: eine Draufsicht auf einen Horizontalschnitt der Ausführungsform gemäß Figur 6 mit freien Betätigungsenden;
- Figur 8: die Ausführungsform gemäß Figur 7 mit auf die Taschenführung auftreffenden Betätigungsenden;
- Figur 9: die Ausführungsform gemäß Figur 8 mit entlang der Taschenführung maximal verlagerten Betätigungsenden;
- Figur 10: eine Querschnittsansicht senkrecht zur Längsachse einer beispielhaften Ausführungsform einer Kupplung;

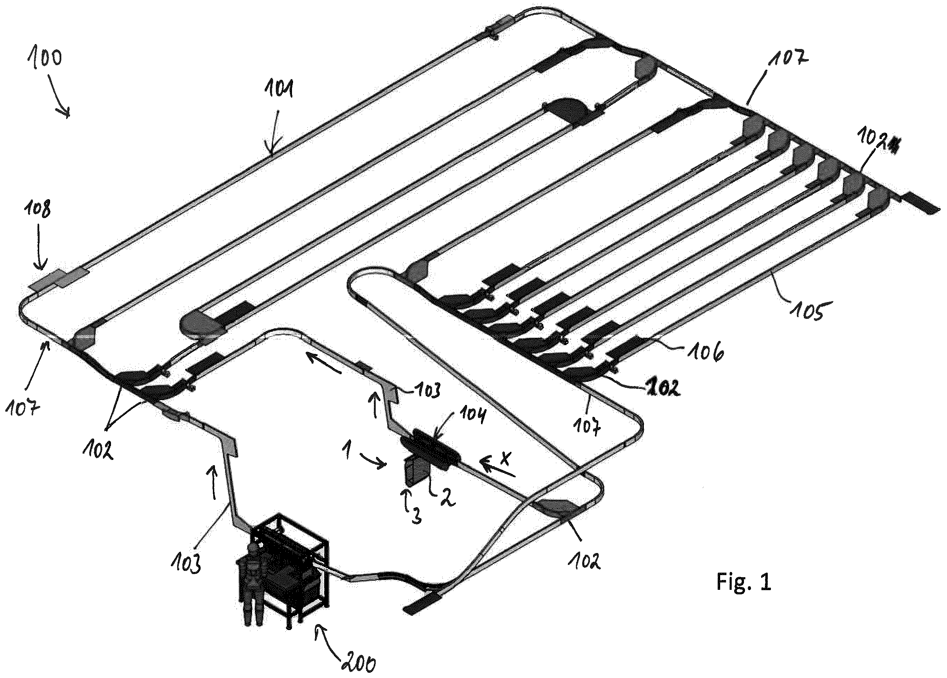

Die Fig. 1 zeigt eine beispielhafte Ausführungsform eines Hängeförderers 100 gemäß dem Stand der Technik. Der Hängeförderer 100 besteht im Wesentlichen aus einem System aus Förderschienen 101, die beispielsweise als ein Stauförderer 105 oder als ein Transferförderer 107 ausgebildet sein können. An einem Übergang 108 zwischen einem Stauförderer 105 und einem Transferförderer 107 erfolgt die Übertragung der Taschen 1 zwischen den beiden Transportsystemen. Geeignete Systeme für einen Stauförderer 105 und einen Transferförderer 107 sind in der WO 2020/128941 A1 und in der EP 3670393 A1 beschrieben.

Für die Sequenzierung der Taschen 1, welche entlang der Förderscheine 101 transportiert sind und in einer bevorzugten Reihenfolge und zu einer bevorzugten Zeit beispielsweise einem Entladearbeitsplatz 104 oder einer Entladestation 200 zugeführt werden sollen, kann eine Sortierschleife aus einer Mehrzahl parallel zueinander geführter Stauförderer 105, die vorlaufseitig und rücklaufseitig über Weichen 102 an einen Transferförderer 107 angeschlossen sein können, bereitgestellt sein. Zur Verringerung des Footprint der Anlage können Schrägförderer 103 verwendet werden, welche einen mehretagigen Aufbau der Anlage erlauben. Überfüllsensoren 106 entlang der Staufördererstrecken 105 der Sortierschleife detektieren einen Füllstand des betreffenden Stauförderers 105, um durch geeignete Umleitung von der Sortierschleife zugeführter neuer Taschen eine Überfüllung bestimmter Stauförderstrecken 105 zu vermeiden.

Obschon die komplette Anlage weitestgehend automatisiert ausgebildet ist, erfolgt zumindest die Entladung der Taschen 1 bei den aus dem Stand der Technik bekannten Anlagen noch benutzerunterstützt. Beispielsweise werden bei dem Entladearbeitsplatz 104 die von der Tasche 1 gehaltenen Gegenstände manuell aus der Tasche entfernt, etwa durch seitlichen Eingriff parallel zu den Seitenwänden 2 der Tasche 1. Die Entladestation 200 gemäß Fig. 1 kann eine Kulisse aufweisen, entlang welcher ein Öffnungsbügel der Tasche, welcher eine obere Öffnung der Tasche 1 begrenzt und an dem die zwei Seitenwände 2 unter einem Abstand zueinander auf gegenüberliegenden Seiten des Bügels befestigt sind, aus der Vertikale in die Horizontale überführt ist, sodass der Bediener von oben in die Tasche 1 eingreifen und den von der Tasche 1 aufgenommenen Gegenstand entnehmen kann. Es besteht der Wunsch, auch diesen Entladevorgang zu automatisieren. Diesen Wunsch adressiert der Gegenstand der vorliegenden Patentanmeldung.

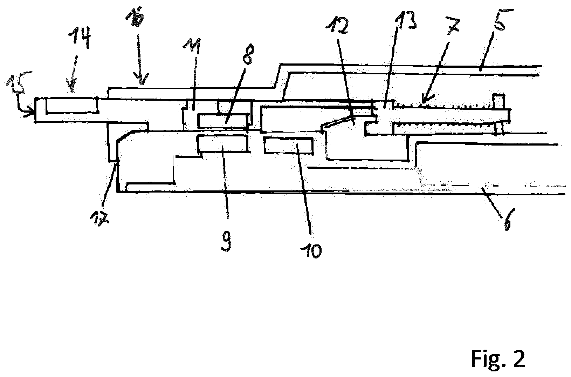

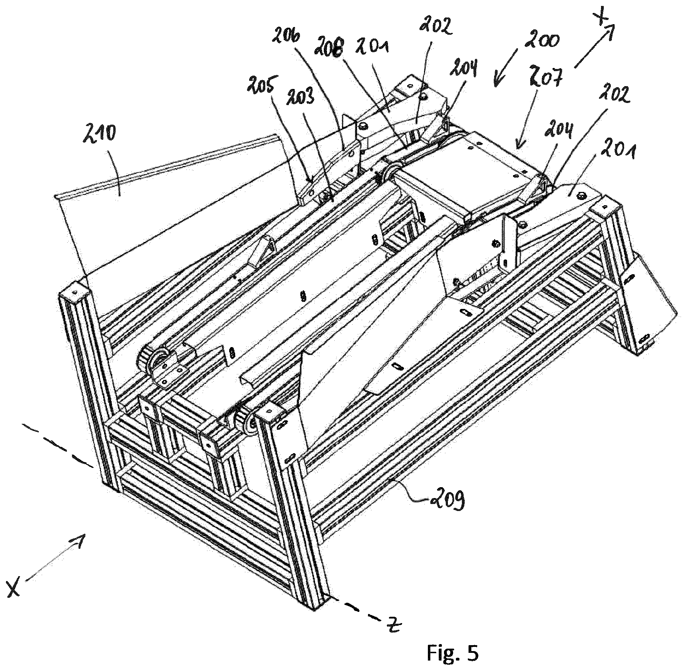

Die Figuren 2 bis 4c zeigen eine Kupplung 4, welche für die automatisierte Entriegelung geeignet ist. Die Kupplung 4 kann beispielsweise an einer Tasche 1 der Anordnung gemäß Fig. 1 im Bodenbereich 3 angeordnet sein und die beiden gegenüberliegenden und senkrecht zur Förderrichtung x ausgerichteten Seitenwände 2 der Tasche miteinander verbinden. Eine beispielhafte Entladestation für die vollautomatische Entladung der Tasche im Zuge einer automatisierten Betätigung der Kupplung 4 ist in den Figuren 5 bis 9 gezeigt.

Die Fig. 2 zeigt eine beispielhafte Ausführungsform einer Kupplung 4 in der Verriegelungsposition des Stellmechanismus 7. Der Stellmechanismus weist einen Magnetschieber 11 auf, der in einer der beiden Kupplungshälften 5, 6 entlang deren Längsrichtung verschieblich aufgenommen ist. Die Längsrichtung der Kupplung 4 bzw. der Kupplungshälften 5, 6 kann sich in der Breitenrichtung der Tasche erstrecken, das heißt horizontal und senkrecht zur Förderrichtung x (vgl. Fig. 1).

Der Magnetschieber 11 kann eine mechanische Vorspannung in die in der Fig. 2 gezeigte Verriegelungsposition aufweisen. Dazu ist bei der Ausführungsform gemäß Fig. 2 eine Spiralfeder vorgesehen, die in der den Magnetschieber 11 aufweisenden Kupplungshälfte 5 aufgenommen ist und im Innern des Gehäuses 16 der Kupplungshälfte 5 an einer Gehäusewand abgestützt ist, durch welche sich der Magnetschieber mit einem Führungszapfen hindurch erstreckt. In der in Fig. 2 gezeigten Verriegelungsposition ragt der Magnetschieber 11 mit seinem Betätigungsende 14 aus dem Gehäuse 16 der ersten Kupplungshälfte 5 um einen Verstellweg heraus, um welchen das Betätigungsende zwischen der Verriegelungsposition und der Auslöseposition verstellbar ist. In der Verriegelungsposition reicht der Haken 12 in die hinterschnittige Aufnahme 13 ein, wobei die hinterschnittige Aufnahme 13 mit einem Vorsprung, welche den von dem Haken 12 hintergriffenen Hinterschnitt bildet, den Haken 12 untergreift und an dem Haken 12 anliegt, sodass die in Fig. 2 gezeigte Verriegelungsposition der Stellmechanik 7 reproduzierbar definiert ist.

Die Kupplungshälften 5, 6 weisen magnetische Elemente 8, 9, 10 auf. Vorzugsweise sind sämtliche magnetischen Elemente 8, 9, 10 als Permanentmagnete ausgebildet. Insbesondere das Magnetelement 9 kann jedoch auch als ein ferromagnetisches Element ausgebildet sein, etwa ein eisenhaltiges Metall aufweisen.

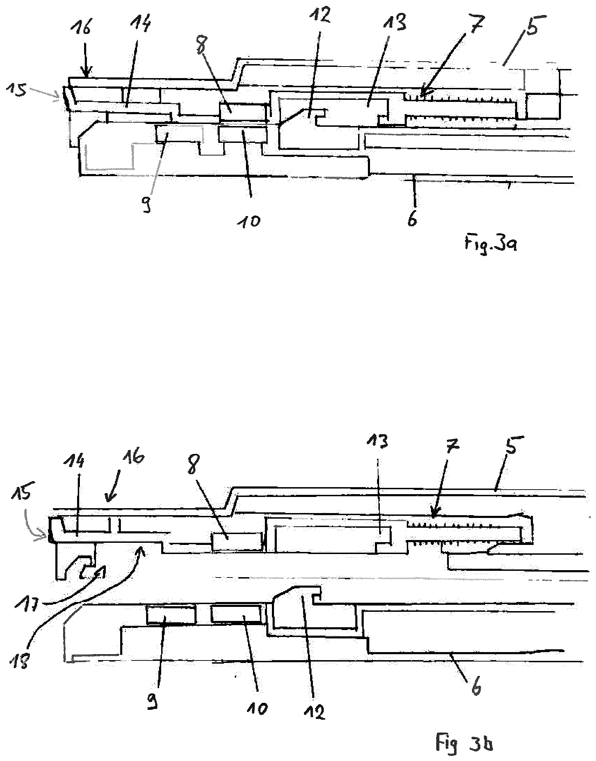

Für die Bereitstellung einer Abstoßkraft zwischen den beiden Kupplungshälften 5, 6 in der in Fig. 3a gezeigten Auslöseposition der Stellmechanik 7, können die magnetischen Elemente 8 und 10 jeweils als Permanentmagnet ausgebildet sein und sich mit identischen Polen gegenüberstehen, sodass die beiden Kupplungshälften 5, 6 von einander abgestoßen werden. Da in der in der Fig. 3a gezeigten Auslöseposition nicht nur die beiden gleichgepolten Permanentmagneten 8, 10 fluchtend einander gegenüberstehen, sondern darüber hinaus auch der Haken 12 aus dem Hinterschnitt der hinterschnittigen Aufnahme 13 herausgelöst ist, können die beiden Kupplungshälften 5, 6 von einander abgelöst werden, was in Fig. 3b gezeigt ist. Im vorliegenden Fall kann insbesondere die den Haken 12 aufweisende zweite Kupplungshälfte 6 aus einer Formschlussaufnahme 17 der ersten Kupplungshälfte 5 herausgelöst werden. Da in der Auslöseposition gemäß den Figuren 3a und 3b die gleichgepolten Permanentmagnete 8, 10 in der Flucht gegenüberstehen, während der Abstand zwischen den sich anziehenden, entgegengesetzt gepolten magnetischen Elementen 8, 9 gegenüber der Verriegelungsposition (siehe Fig. 2) vergrößert ist, überwiegt die Abstoßung zwischen den Permanentmagneten 8, 10 gegenüber einer gegebenenfalls auch in der Auslöseposition gemäß den Figuren 3a und 3b noch verbleibenden, geringen Anziehungskraft zwischen den magnetischen Elementen 8 und 9.

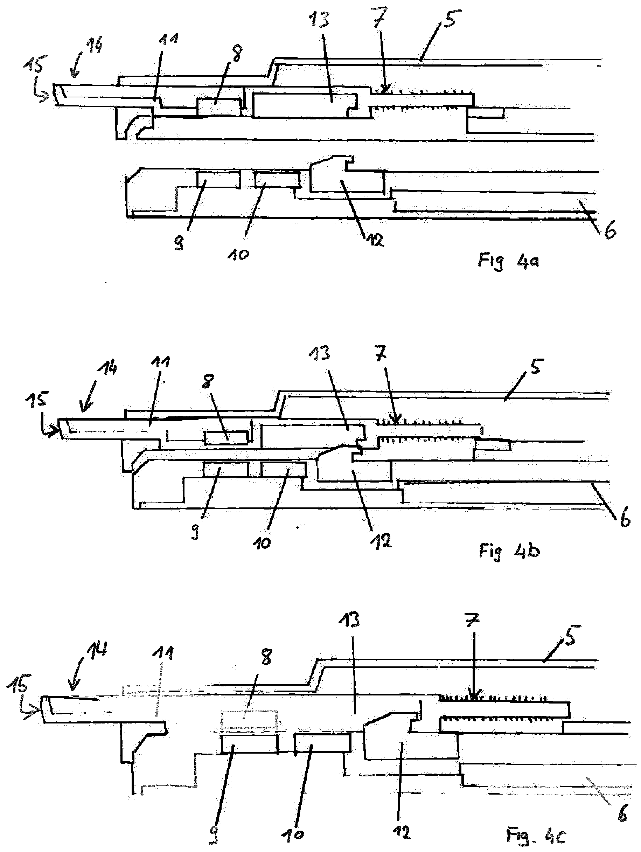

Nach dem Ablösen der beiden Kupplungshälften 5, 6 voneinander kann die Stellmechanik 7, insbesondere der Magnetschieber 11 wieder die Verriegelungsposition einnehmen, wobei er diese Verriegelungsposition aufgrund seiner Vorspannung in die Verriegelungsposition aufgrund beispielsweise der Spiralfeder selbsttätig einnimmt. Dies führt dazu, wie in den Figuren 4a und 4b gezeigt ist, dass die entgegengesetzt gepolten magnetischen Elemente 8 und 9 wieder in die Flucht gebracht werden, wobei sie selbst bei der in Fig. 4a gezeigten, teilweise beabstandeten Position aufgrund der Anziehungskraft zwischen den magnetischen Elementen 8 und 9 eine Zentrierung und weitere Annäherung zueinander erfahren, wie dies in Fig. 4b gezeigt ist. Die Ausrichtung der Kupplungshälften 5, 6 zueinander, wie sie in Fig. 4a gezeigt ist, kann beispielsweise der Ausgangszustand sein, welche die beiden Kupplungshälften 5, 6 unmittelbar nach dem Entladevorgang einnehmen, beispielsweise nach dem Verlassen einer Entladestation 200, wie sie in Fig. 5 gezeigt ist.

Die Seitenwände 2 der Tasche 1 können beispielsweise aus einem biegeschlaffen Textilmaterial bestehen, sodass die Kupplungshälften 5, 6 die Tasche wie ein Gewicht im Bodenbereich der Seitenwände 2 in die Vertikale bringen, wobei die beiden Seitenwände 2 beispielsweise aufgrund einer ebenfalls im Wesentlichen vertikalen Anordnung eines Öffnungsbügels am oberen Ende der Tasche 1 bereits weitestgehend einander angenähert sind. Ein dann noch verbleibender Restabstand zwischen den Kupplungshälften 5, 6 wie er in Fig. 4a gezeigt ist, kann mit Hilfe der magnetischen Anziehungskraft zwischen den magnetischen Elementen 8, 9 überbrückt werden, sodass die beiden Kupplungshälften 5, 6 die in den Figuren 4a bis 4c gezeigte Annäherung und Verrastung erfahren.

Nachdem die Tasche aufgrund der magnetischen Anziehungskraft zwischen den magnetischen Elementen 8 und 9 soweit einander angenähert sind, sodass der Haken 12 der zweiten Kupplungshälfte mit einer Anlaufschräge an einer korrespondierenden Anlaufschräge an einem Hinterschnitt der hinterschnittigen Aufnahme 13 der ersten Kupplungshälfte 5 zur Anlage kommt, kann aufgrund des in dieser Position verbleibenden, geringen Restabstandes zwischen der in Fig. 4b gezeigten Position und der finalen Verriegelungsposition gemäß Fig. 4c die Anziehungskraft zwischen den magnetischen Elementen 8 und 9 ausreichen, um unter Überwindung der Vorspannung des Magnetschiebers 11 in seine in Fig. 4a gezeigte Verriegelungsposition der Magnetschieber 11 zumindest soweit aus der Verriegelungsposition in Richtung der Auslöseposition verlagert wird, dass der Haken 12 mit seiner Hakenspitze den Hinterschnitt der hinterschnittigen Aufnahme 13 hintergreifen kann, wie dies in Fig. 4c gezeigt ist, woraufhin der Magnetschieber dann wieder aufgrund der mechanischen Vorspannung in die in Fig. 4c gezeigte Verriegelungsposition überführt wird. In der in Fig. 4c gezeigten vollständigen Verriegelung der beiden Kupplungshälften 5, 6 aneinander sind die beiden komplementär gepolten magnetischen Elemente 8, 9 maximal angenähert, während zwischen den gleichgepolten Magneten 8 und 10 ein lateraler Abstand besteht, welcher aufgrund der senkrecht zur Polfläche propagierenden Magnetfeldlinien ausreichend ist, um eine Abstoßung zwischen den Magneten 8, 10 auf ein zulässiges Mindestmaß zu verringern.

Der Magnetschieber 11 weist an seiner Stirnseite des Betätigungsendes 14, mit dem der Magnetschieber 11 aus dem Gehäuse 16 der ersten Kupplungshälfte 5 herausragt, eine Anlaufkontur 15 auf, mit der er in Förderrichtung x auf eine Taschenführung 201 einer Entladestation 200 trifft, welche den Magnetschieber 11 aus der in Fig. 2 gezeigten Verriegelungsposition in die in Fig. 3a gezeigte Auslöseposition überführt. Die in Fig. 5 gezeigte Entladestation 200 weist eine Rahmen 209 auf, der als ein Schwenkrahmen ausgebildet und um eine senkrecht zur Förderrichtung x gerichtete, horizontale Schwenkachse z verschwenkbar ist. Die Schwenkachse z kann horizontal verlaufen, sodass durch das Verschwenken des Schwenkrahmens 209 eine vertikale Höhe insbesondere der Taschenführung 201 der Entladestation 200 an eine vertikale Höhe der Tasche angepasst werden kann. Obschon in gängigen Hängeförderern die Taschen häufig gleichartig ausgebildet sind, kann es aufgrund der unterschiedlichen Befüllung der Taschen vorkommen, dass die Taschen 1 in ihrer Höhe variieren. Beispielsweise kann die Befüllung der Taschen 1 mit großen oder vielen Gegenstand dazu führen, dass die Tasche baucht, wodurch sie an vertikaler Abmessung verliert. Um diesen von Tasche zu Tasche variablen Höhenunterschied zu kompensieren, kann die Entladestation 200 den zuvor beschriebenen Schwenkrahmen 209 zur Verlagerung der Taschenführung 201 aufweisen. Des Weiteren kann der Entladestation eine Sensoreinrichtung in Förderrichtung vorangestellt sein, welche eine Abmessung der Taschen in Höhenrichtung erfasst und den Schwenkrahmen ansteuert eine für die Entgegennahme der in Höhenrichtung vermessenen Tasche geeignete Verschwenkung durchzuführen.

Grundsätzlich werden die Taschen 1 über die Entladestation 200 hinweggeführt, sodass die Tasche 1 im Wesentlich ausschließlich mit Ihrer Kupplung 4 mit der Entladestation 200 in Kontakt tritt. Seitenführungen 201, die konisch zulaufend ausgebildet sind, führen die Taschen in Horizontalrichtung senkrecht zur Förderrichtung x. Eine zusätzliche Führungswirkung kann mit Hilfe des Taschenmitnehmers 203 bereitgestellt sein, welcher vorliegend als ein umlaufender Zahnriemen 205 mit darauf angeordneten magnetischen Mitnehmerelementen 204 ausgebildet ist, wobei der Taschenmitnehmer 203 nicht auf eine derartige Ausführungsform beschränkt sein soll.

Die magnetischen Mitnehmerelemente 204 haben aber insbesondere den Vorteil, dass sie an den magnetischen Elementen 8, 9, 10, beispielsweise der den Magnetschieber 11 aufweisenden Kupplungshälfte 5 über den in der Kupplungshälfte 5 aufgenommenen Magneten 8 ankoppelbar ist, sodass eine besonders prozesssichere Führung der Kupplung 4 durch die sich verjüngende Taschenführung 201 hindurch möglich ist.

Die Kupplungen 4 können der Taschenführung 201 über eine Rampe und ein sich an die Rampe anschließendes Plateau zugeführt sein. Die Rampe kann die Funktion aufweisen, die Kupplung 4 anzuheben und damit mechanisch zu entlasten, beispielsweise hinsichtlich einer Scherkraft, die auf die Kupplung aufgrund der in der Tasche vorgehaltenen Gegenstände wirkt. Dies erleichtert die Betätigung der Stellmechanik und damit die Auslösung der Kupplungshälften 5, 6 voneinander. Insbesondere soll die Kupplung 4 in ihrem angehobenen und insoweit entlasteten Zustand durch die Taschenführung 201 hindurch und insbesondere an den Anfahrwänden 202 der Taschenführung 201 entlanggeführt werden.

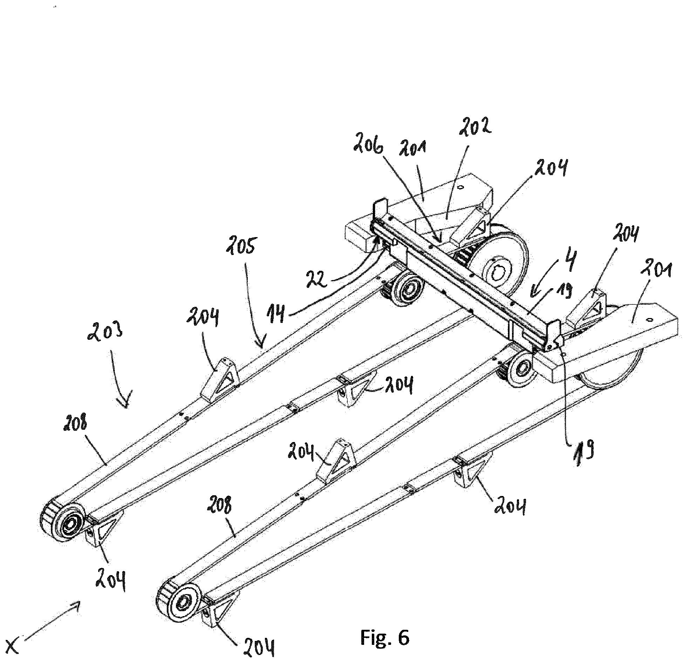

Die Hindurchführung der Kupplung 4 durch die Taschenführung 201 und die dadurch bewirkte Ablösung der Kupplungshälften 5, 6 voneinander ist in den Figuren 6 bis 9 im Detail gezeigt. Zum besseren Verständnis zeigt die Figur 6 die in Bezug auf die Zuführung und Auslösung der Kupplung im Wesentlichen Bestandteile der in Fig. 5 gezeigten beispielhaften Ausführungsform der Entladestation 200. Der bereits beschriebene Taschenmitnehmer 203 kann einen umlaufenden Riemen aufweisen.

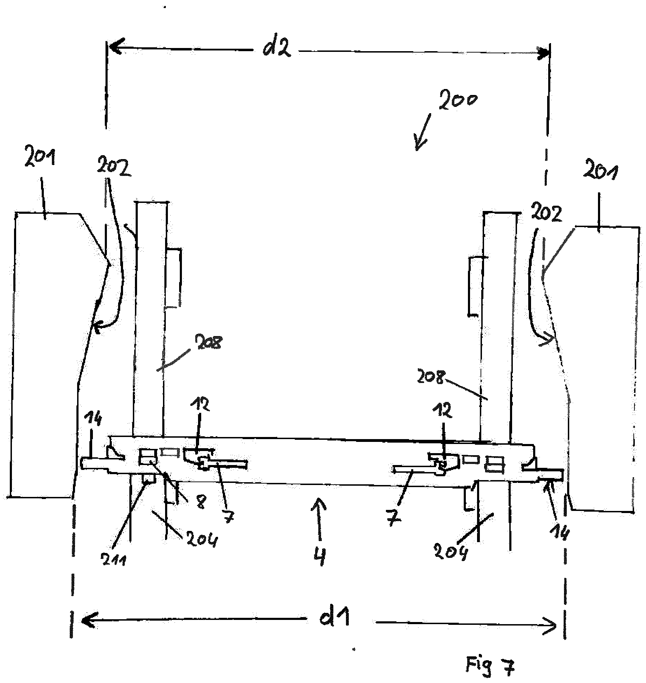

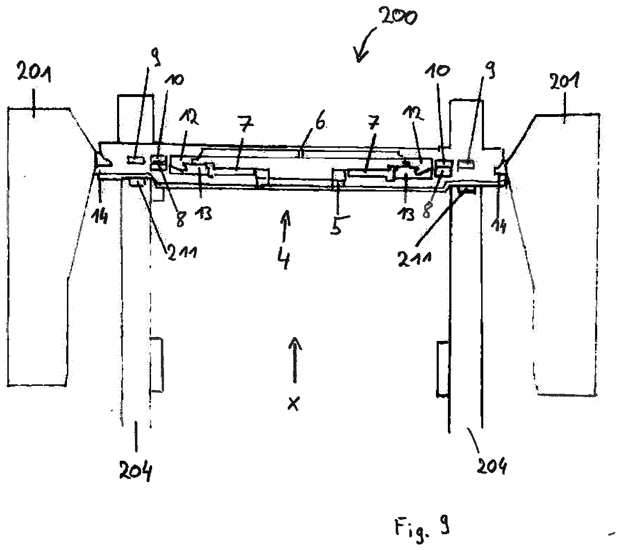

Die Figur 6 zeigt wie die Kupplung 4 von dem Taschenmitnehmer 203 der Taschenführung 201 zugeführt und an der Taschenführung 201 ausgelöst wird. Der Taschenmitnehmer 203 weist Mitnehmerelemente 204 auf, die außenseitig auf einem umlaufenden Riemen 205 angeordnet sind. Der Riemen 205 ist als ein Zahnriemen ausgebildet, der über eine Mehrzahl Umlenkrollen umlaufend geführt ist. Der Riemen 205 bildet einer Rampe, mithin ist er unter einem austeigenden spitzen Winkel zur Horizontalen geführt. Die beiden umlaufenden Riemen 205 weisen einen Abstand zueinander auf, der gerade danach bemessen ist, dass der Taschenmitnehmer 203 an gegenüberliegenden Längsenden der Kupplung 4 mit seinen Mitnehmerelementen 204 angreifen kann. Die Mitnehmerelemente 204 weisen einen Magnet 211 auf, der mit dem magnetischen Element 8 der den Magnetschieber 11 aufweisenden Kupplungshälfte 5 gekoppelt werden kann. Dies ist insbesondere in Figur 7 zu erkennen, wo der Magnet 211 des Mitnehmerelements 204 in der Flucht zu dem Magnet 8 der ersten Kupplungshälften 5 steht. Es ist weiterhin zu erkennen, (siehe Figur 9), dass im Verlaufe der Verlagerung des Magnetschiebers 11 aus der in Figur 7 gezeigten Verriegelungsposition in die in Figur 9 gezeigte Auslöseposition auch der Eingriff zwischen dem Magneten 211 des Mitnehmerelements 204 und dem magnetischen Element 8 der ersten Kupplungshälften 5 getrennt wird. Da in der in Figur 9 gezeigten Position die Kupplung jedoch bereits prozesssicher in die Auslöseposition überführt worden ist, ist die Entkopplung zwischen den Magneten 8, 211 des Mitnehmerelements 204 und der ersten Kupplungshälfte 5 unkritisch.

Aufgrund des zur Horizontalen unter einem spitzen Winkel ansteigenden Verlaufs des Taschenmitnehmers 203 und insbesondere des Gurtes 205 kommt die in der horizontalen Förderrichtung x dem Taschenmitnehmer 203 zugeführte Tasche 1 früher oder später in den Eingriffsbereich eines Mitnehmerelements 204, sodass eine magnetische Kopplung zwischen der Kupplung 4 und dem magnetischen Mitnehmerelements 204 erfolgen kann. Die umlaufenden Riemen 205 des Taschenmitnehmer 203 sind in Bezug auf ihre jeweiligen Mitnehmerelemente 204 gleichlaufend synchronisiert, sodass die Mitnehmerelemente 204 sich paarweise gegenüberstehend fluchten und somit an gegenüberliegenden Enden der Kupplung 4 angekoppelt werden können. Die Kupplung 4 erfährt somit einen definierten Vorschub in der Förderrichtung x bzw. unter einem spitzen Winkel zu der Förderrichtung x die Rampe des Riemens 205 hinauf, bis die Kupplung 4 auf die Taschenführung 201 trifft.

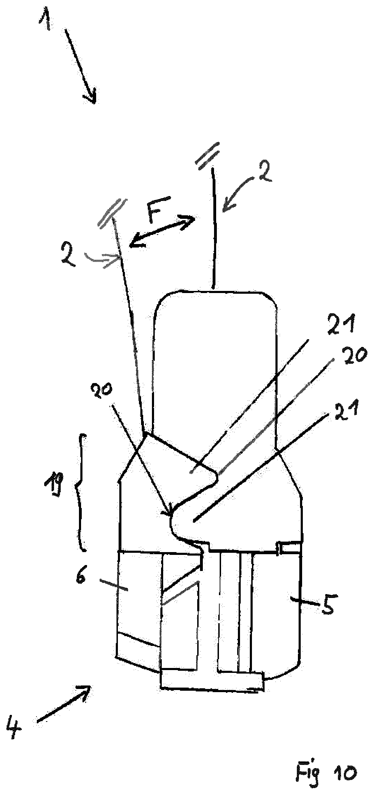

Wie in Figur 6 zu erkennen ist, weist die Kupplung 4 einen den Seitenwänden der Tasche (nicht dargestellt) zugewandten Kupplungsabschnitt auf, der beispielsweise als der in Figur 10 dargestellte Formschlussabschnitt 19 ausgebildet sein kann. Dieser Formschlussabschnitt 19 weist eine horizontale Breite senkrecht zur Förderrichtung x auf, die größer als die lichte Breite zwischen den gegenüberliegenden Taschenführungen 201 ist, sodass die Tasche auf der Taschenführung 201 abgestützt ist. Insbesondere ist die Kupplung 4, über welche die Tasche 1 auf der Taschenführung 201 abgestützt ist, dadurch mechanisch entlastet, was eine Betätigung des Stellmechanismus 7 der Kupplung 4 erleichtert.

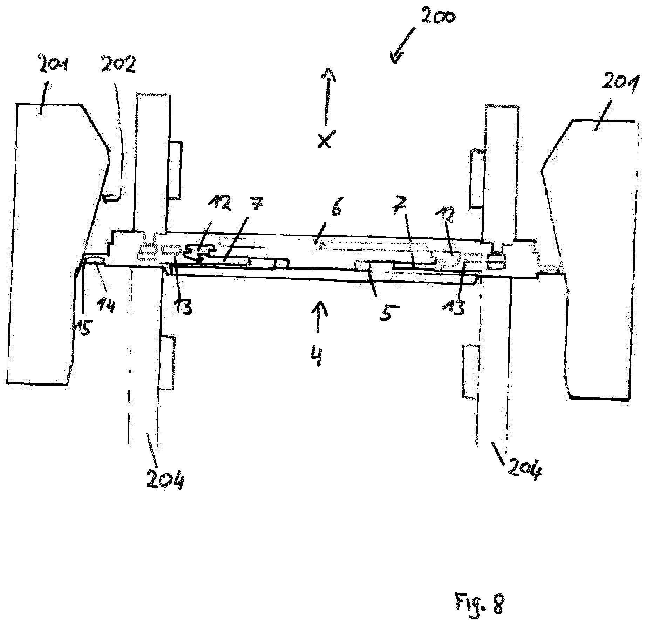

Die Betätigung des Verstellmechanismus ist anhand der Figuren 7-9 erläutert. Nachdem gemäß Figur 7 die Kupplung 4 mithilfe der auf dem umlaufenden Riemen 5 angeordneten Mitnehmerelemente 204 soweit der Taschenführung 201 angenähert worden ist, dass die Kupplung 4 noch berührungslos zwischen gegenüberliegenden Seiten der beiden Teilelemente der Taschenführung 201 angeordnet ist, führt das weitere Verlagern der Kupplung 4 in der Förderrichtung x dazu, dass die Kupplung 4 mit ihren Betätigungselementen 14 an gegenüberliegenden Stirnseiten der Kupplung 4 und insbesondere mit jeweiligen Anlaufkonturen 15 an den äußeren gegenüberliegenden Stirnseiten der Betätigungsenden 14 auf gegenüberliegende Anfahrwände 202 der Taschenführung 201 trifft, die in Förderrichtung x aufeinander zulaufen, mithin das horizontale lichte Öffnungsmaß der Taschenführung 201 verringern. Nachdem die Kupplung 4 mit ihren Betätigungsenden 14 in der in Figur 8 gezeigten Erstkontaktposition auf die Anfahrwände 202 getroffen ist, führt das weitere Verlagern der Kupplung 4 in der Förderrichtung x dazu, dass die Betätigungsenden 14 an den gegenüberliegenden Stirnseiten der Kupplung 4 in das Gehäuse 16 der Kupplung 4 eingeschoben werden, wodurch die beiden Stellmechanismen 7 in der bereits mit Bezug auf die Figuren 2 bis 4c beschriebenen Weise betätigt werden, sodass die Kupplung 4 mit dem Erreichen der in Figur 9 gezeigten relativen Anordnung in Bezug auf die Taschenführung 201 ihre Auslöseposition erreicht, in welcher die beiden Kupplungshälften 5, 6 voneinander abgelöst werden können, also insbesondere sowohl die mechanische Anziehung zwischen den magnetischen Elementen 8, 9 als auch die Verrastung durch den in die hinterschnittige Aufnahme 13 eingreifenden Haken 12 unterbrochen ist.

Die Figur 10 zeigt eine besonders vorteilhafte Ausführungsform einer Kupplung 4, bei der die Kupplungshälften 5, 6 nicht unmittelbar an die Seitenwände 2 der Tasche 1 angekoppelt sind, sondern vermittelt über einen Formschlussabschnitt 19, wodurch insbesondere die Stellmechanik 7 von einer etwaigen Kraft F, die auf die Seitenwände 2 wirkt und zu einer Verkantung der beiden sich in der Verriegelungsposition befindenden Kupplungshälften 5, 6 führen könnte, entgegenwirkt. Insbesondere dann, wenn die Verriegelungsmechanik lediglich für die magnetische Kopplung der beiden Kupplungshälften 5, 6 ausgelegt ist und allein magnetisch die für den Zusammenhalt der Kupplungshälften 5, 6 erforderliche Haltekraft bereitgestellt ist, kann der Formschlussabschnitt 19 die Tragkraft der Tasche erhöhen, innerhalb welcher prozesssicher Gegenstände mit der Tasche transportiert werden können, insbesondere dahingehend, dass eine versehentliche Auslösung der Kupplung und damit ein Herausfallen der Gegenstände verhindert wird.

Wenn die Kupplung 4, insbesondere die Stellmechanik 11 weiterhin die bereits zuvor beschriebenen Rastmittel bestehend aus einem Haken 12 und einer hinterschnittigen Aufnahme 13 aufweist, kann der Formschlussabschnitt 19 dazu dienen, ein Verkanten des Hakens in dem Formschlussadapter zu vermeiden, sodass die prozesssichere Betätigung der Stellmechanik 7 durch Verlagerung des Magnetschiebers 11 auch bei großen und sperrigen Gegenständen, welche eine erhebliche horizontal wirkende Kraft auf die Seitenwände 2 ausüben, gewährleistet ist. Insbesondere weist der Formschlussabschnitt 19 eine Nut 20 und eine in die Nut 20 eingreifende Feder 21 auf, wobei die Nut insofern doppelt ausgeführt ist, als dass jeweils angrenzend an ihre Nut 20 jede der beiden Kupplungshälften 5, 6 auch eine Feder 21 aufweist, wobei je Kupplungshälfte 5, 6 die Nut und die Feder unmittelbar ineinander übergehen.

### Bezugszeichenliste:

| | | | |
|---|---|---|---|
| 1 | Tasche | 101 | Förderschiene |
| 2 | Seitenwand | 102 | Weiche |
| 3 | Taschenboden | 103 | Schrägförderer |
| 4 | Kupplung | 104 | Entladearbeitsplatz |
| 5 | erste Kupplungshälften | 105 | Stauförderer |
| 6 | zweite Kupplungshälften | 106 | Überfüllsensor |
| 7 | Stellmechanik | 107 | Transferförderer |
| 8 | erstes magnetisches Element | 108 | Übergang Transferförderer auf Stauförderer |
| 9 | zweites magnetisches Element | | |
| 10 | drittes magnetisches Element | 200 | Entladestation |
| 11 | Magnetschieber | 201 | Taschenführung |
| 12 | Haken | 202 | Anfahrwand |
| 13 | Hakenaufnahme | 203 | Taschenmitnehmer |
| 14 | Betätigungsende | 204 | Mitnehmerelement |
| 15 | Anlaufkontur | 205 | Rampe |
| 16 | Gehäuse | 206 | Plateau |
| 17 | Formschlussaufnahme | 207 | Rutsche |
| 18 | Ende | 208 | Riemen |
| 19 | Formschlussabschnitt | 209 | Schwenkrahmen |
| 20 | Nut | 210 | Seitenführung |
| 21 | Feder | 211 | Permanentmagnet |
| 22 | Unterseite | X | Förderrichtung |
| 23 | Gehäuseaußenseite | Z | Schwenkachse |
| 100 | Hängeförderer | F | Kraft |

## Patentansprüche

1. Tasche (1) für einen Hängeförderer (100), wobei die Tasche (1) zwei Seitenwände (2) aufweist, die an einem Taschenboden (3) lösbar miteinander verbunden sind, wobei die Seitenwände (2) an dem Taschenboden (3) jeweils mindestens ein magnetisches Element (8, 9, 10) aufweisen, die einander anziehen, wobei das magnetische Element (8, 9, 10) einer ersten der beiden Seitenwände (2) ein Permanentmagnet und das magnetische Element (8, 9, 10) einer zweiten der beiden Seitenwände (2) ein ferromagnetisches Metall oder ein Permanentmagnet mit in Bezug auf den Permanentmagnet der ersten der beiden Seitenwände (2) entgegengesetzter Polung ist, wobei der Taschenboden (3) von einer Kupplung (4) gebildet ist, mit der die Seitenwände (2) lösbar miteinander verbunden sind, wobei jede Seitenwand (2) eine von zwei Kupplungshälften (5, 6) der Kupplung (4) aufweist, **dadurch gekennzeichnet, dass** die Tasche ferner eine Stellmechanik (7) aufweist, über welche die Kupplung (4) zwischen einer Verriegelungsposition, in der die Kupplungshälften (5, 6) aneinander festgelegt sind, und einer Auslöseposition, in der die Kupplungshälften (5, 6) voneinander gelöst sind, verstellbar ist, wobei die Kupplungshälften (5, 6) jeweils mindestens eines der magnetischen Elemente (8, 9, 10) aufweisen, **dadurch gekennzeichnet, dass** die magnetischen Elemente (8, 9, 10) über die Stellmechanik (7) relativ zueinander verstellbar und in der Verriegelungsposition relativ zu der Auslöseposition weiter einander angenähert sind, wobei die Stellmechanik (7) mindestens einen Magnetschieber (11) aufweist, an dem das mindestens eine magnetische Element (8, 9, 10), vorzugsweise ein Permanentmagnet, einer der beiden Kupplungshälften (5, 6) angeordnet ist, wobei mit dem Magnetschieber (11) ein Abstand dieses magnetischen Elements (8, 9, 10) in Bezug auf das mindestens eine magnetische Element (8, 9, 10) der anderen Kupplungshälfte (5, 6) verstellbar ist, wobei zumindest die den Magnetschieber (11) aufweisende Kupplungshälfte (5, 6) entlang der Breite des Taschenbodens (3) erstreckt, wobei der Magnetschieber (11) in der Breitenrichtung mit einem Betätigungsende (14) aus der Kupplungshälfte (5, 6) vorsteht.

2. Tasche (1) nach Anspruch 1, bei der die Kupplungshälften (5, 6) jeweils mindestens ein magnetisches Element (8, 9, 10), vorzugsweise einen Permanentmagnet, aufweisen, die gleich gepolt und in der Auslöseposition relativ zu der Verriegelungsposition weiter einander angenähert und vorzugsweise mit ihren gleichen Polen sich gegenüberstehend angeordnet sind.

3. Tasche (1) nach einem der vorangehenden Ansprüche, bei der der Magnetschieber (11) weiterhin einen Haken (12) oder eine zu dem Haken komplementäre hinterschnittige Hakenaufnahme (13) aufweist, der/die mit dem Magnetschieber (11) zwischen der Verriegelungsposition und der Auslöseposition verstellbar ist.

4. Tasche (1) nach einem der vorangehenden Ansprüche, bei der die Kupplung (4) zwei Magnetschieber (11) aufweist, die an in Breitenrichtung des Taschenbodens (3) gegenüberliegenden Enden des Taschenbodens (3) in entgegengesetzter Erstreckungsrichtung mit ihrem jeweiligen Betätigungsende (14) aus derselben oder unterschiedlichen der Kupplungshälften (5, 6) vorstehen.

5. Tasche (1) nach einem der vorangehenden Ansprüche, bei der eine äußere Stirnseite des Betätigungsendes (14) eine Anlaufkontur (15) aufweist, die entgegen einer vorgesehenen Förderrichtung (x) der Tasche (1) ansteigt.

6. Tasche (1) nach einem der vorangehenden Ansprüche, bei der der Magnetschieber (11) in einem Gehäuse (16) der den Magnetschieber (11) aufweisenden Kupplungshälfte (5, 6) aufgenommen ist und zumindest anteilig zu einer Formschlussaufnahme (17) zur Aufnahme der anderen Kupplungshälfte (5, 6) hin freiliegt.

7. Tasche (1) nach Anspruch einem der vorangegangenen Ansprüche, bei der ein Magnetschieber (11) der Kupplung (4) am Taschenboden (3) eine Formschlussaufnahme (17) einer ersten Kupplungshälfte (5, 6) der Kupplung (4) in Bezug auf eine Einsteckrichtung einer zweiten Kupplungshälfte (5, 6) der Kupplung (4) in die Formschlussaufnahme (17) an einem rückwärtigen Ende (18) der Formschlussaufnahme begrenzt, sodass die zweite Kupplungshälfte (5, 6) in ihrer vollständig in die Formschlussaufnahme (17) eingesetzten Position dem Magnetschieber (11) maximal angenähert ist.

8. Tasche (1) nach einem der vorangegangenen Ansprüche, bei der die Stellmechanik (7), vorzugsweise ein Magnetschieber (11) der Stellmechanik (7), an dem das mindestens eine magnetische Element (8, 9, 10) einer der beiden Kupplungshälften (5, 6) angeordnet ist, in der Auslöseposition eine mechanische Vorspannung in Richtung der Verriegelungsposition aufweist.

9. Tasche (1) nach einem der vorangegangen Ansprüche, bei der die Kupplung (4) einen Formschlussabschnitt (19) aufweist, in dem die beiden Kupplungshälften (5, 6) mit zueinander komplementären Konturen ineinandergreifen, wobei der Formschlussabschnitt (19) zwischen der Stellmechanik (7) und den Seitenwänden (2) angeordnet ist.

10. Tasche (1) nach Anspruch 9, bei der der Formschlussabschnitt (19) eine sich in Breitenrichtung des Taschenbodens (3) erstreckenden Nut (20) an einer ersten der beiden Kupplungshälften (5, 6) und eine sich in Breitenrichtung des Taschenbodens (3) erstreckende, in der Verriegelungsposition in die Nut (20) eingreifende Feder (21) an der anderen der beiden Kupplungshälften (5, 6) aufweist.

11. Tasche (1) nach Anspruch 7 oder 8, bei der sich die Kupplungshälften (5, 6) für die Bereitstellung des Formschlusses im Wesentlichen über die gesamte Breite des Taschenbodens (3) erstreckt und die Stellmechanik (7) einschließlich eines Betätigungsendes (14), mit dem der Magnetschieber (11) in der Breitenrichtung aus der Kupplungshälfte (5, 6) vorsteht, in der Breitenrichtung überragt, so dass an einer dem Betätigungsende (14) zugewandten Unterseite (22) des Formschlussabschnitts (19) eine Auflageseite für die Kupplung (4) geschaffen ist.

12. Anordnung aus einer Tasche (1) nach einem der vorangegangenen Ansprüche und einem Taschenmitnehmer (203), bei der das mindestens eine magnetische Element (8, 9, 10) einer der beiden Kupplungshälften (5, 6) ein Permanentmagnet ist, der mit seinem Pol, mit dem er von dem magnetischen Element (8, 9, 10) der anderen Kupplungshälfte (5, 6) abgewandt ist, einer Gehäuseaußenseite (23) der ihm zugeordneten Kupplungshälften (5, 6) zugewandt ist, sodass über einen an der Gehäuseaußenseite (23) angekoppelten magnetischen Taschenmitnehmer (203) die Tasche (1) angetrieben werden kann.

## Claims

1. Pocket (1) for an overhead conveyor (100), the pocket (1) having two side walls (2) which are releasably connected to one other at a pocket base (3), the side walls (2) each having, on the pocket base (3), at least one magnetic element (8, 9, 10) which attract one another, the magnetic element (8, 9, 10) of a first of the two side walls (2) being a permanent magnet and the magnetic element (8, 9, 10) of a second of the two side walls (2) being a ferromagnetic metal or a permanent magnet with a polarity opposite to that of the permanent magnet of the first of the two side walls (2), the pocket base (3) being formed by a coupling (4) via which the side walls (2) are releasably connected to one another, each side wall (2) having one of two coupling halves (5, 6) of the coupling (4), **characterized in that** the pocket further comprises an adjusting mechanism (7) by means of which the coupling (4) can be adjusted between a locking position, in which the coupling halves (5, 6) are fixed to one another, and a release position, in which the coupling halves (5, 6) are released from one another, the coupling halves (5, 6) each having at least one of the magnetic elements (8, 9, 10), **characterized in that** the magnetic elements (8, 9, 10) can be adjusted relative to one other by means of the adjusting mechanism (7) and are brought closer to one other in the locking position relative to the release position, the adjusting mechanism (7) having at least one magnetic slider (11) on which the at least one magnetic element (8, 9, 10), preferably a permanent magnet, of one of the two coupling halves (5, 6) is arranged, the distance of this magnetic element (8, 9, 10) relative to the at least one magnetic element (8, 9, 10) of the other coupling half (5, 6) being adjustable by means of the magnetic slider (11), at least the coupling half (5, 6) having the magnetic slider (11) extending along the width of the pocket base (3), the magnetic slider (11) projecting from the coupling half (5, 6) in the width direction with an actuating end (14).

2. Pocket (1) according to claim 1, wherein the coupling halves (5, 6) each have at least one magnetic element (8, 9, 10), preferably a permanent magnet, which are polarized in the same way and are closer to one another in the release position relative to the locking position and are preferably arranged with their same poles facing one other.

3. Pocket (1) according to either of the preceding claims, wherein the magnetic slider (11) further comprises a hook (12) or an undercut hook receptacle (13) which is complementary to the hook, the hook or hook receptacle being adjustable between the locking position and the release position by means of the magnetic slider (11).

4. Pocket (1) according to any of the preceding claims, wherein the coupling (4) has two magnetic sliders (11) which project from the same or different coupling halves (5, 6) with their relevant actuating end (14) at opposite ends of the pocket base (3) in the width direction of the pocket base (3) in opposite directions of extension.

5. Pocket (1) according to any of the preceding claims, wherein an outer end face of the actuating end (14) has a stop contour (15) which rises in the opposite direction to a provided conveying direction (x) of the pocket (1).

6. Pocket (1) according to any of the preceding claims, wherein the magnetic slider (11) is received in a housing (16) of the coupling half (5, 6) having the magnetic slider (11) and is exposed at least partially to a form-fitting receptacle (17) for receiving the other coupling half (5, 6).

7. Pocket (1) according to any of the preceding claims, wherein a magnetic slider (11) of the coupling (4) on the pocket base (3) limits a form-fitting receptacle (17) of a first coupling half (5, 6) of the coupling (4) at a rear end (18) of the form-fitting receptacle with respect to an insertion direction of a second coupling half (5, 6) of the coupling (4) into the form-fitting receptacle (17), such that the second coupling half (5, 6), in its position fully inserted into the form-fitting receptacle (17), is as close as possible to the magnetic slider (11).

8. Pocket (1) according to any of the preceding claims, wherein the actuating mechanism (7), preferably a magnetic slider (11) of the actuating mechanism (7), on which the at least one magnetic element (8, 9, 10) of one of the two coupling halves (5, 6) is arranged, has a mechanical preload in the release position in the direction of the locking position.

9. Pocket (1) according to any of the preceding claims, wherein the coupling (4) has a form-fitting portion (19) in which the two coupling halves (5, 6) interlock with mutually complementary contours, wherein the form-fitting portion (19) is arranged between the actuating mechanism (7) and the side walls (2).

10. Pocket (1) according to claim 9, wherein the form-fitting portion (19) has a groove (20) extending in the width direction of the pocket base (3) on one of the first of the two coupling halves (5, 6) and a spring (21) extending in the width direction of the pocket base (3) and engaging in the groove (20) in the locking position on the other of the two coupling halves (5, 6).

11. Pocket (1) according to claim 7 or claim 8, wherein the coupling halves (5, 6) extend substantially over the entire width of the pocket base (3) to provide the form fit, and the actuating mechanism (7), including an actuating end (14) with which the magnetic slider (11) projects in the width direction from the coupling half (5, 6), protrudes in the width direction, so that a support surface for the coupling (4) is created on an underside (22) of the form-fitting portion (19) facing the actuating end (14).

12. Assembly consisting of a pocket (1) according to any of the preceding claims and a pocket driver (203), wherein the at least one magnetic element (8, 9, 10) of one of the two coupling halves (5, 6) is a permanent magnet which, with its pole with which it faces away from the magnetic element (8, 9, 10) of the other coupling half (5, 6), is directed toward a housing outer surface (23) of the coupling halves (5, 6) associated with it, so that the pocket (1) can be driven via a magnetic pocket driver (203) which is coupled to the housing outer surface (23).

## Revendications

1. Sac (1) pour un convoyeur suspendu (100), dans lequel le sac (1) présente deux parois latérales (2) qui sont reliées l'une à l'autre de manière amovible au niveau d'un fond de sac (3), dans lequel les parois latérales (2) présentent respectivement au moins un élément magnétique (8, 9, 10) au niveau du fond de sac (3), lesquels éléments magnétiques s'attirent mutuellement, dans lequel l'élément magnétique (8, 9, 10) d'une première paroi latérale parmi les deux parois latérales (2) est un aimant permanent et l'élément magnétique (8, 9, 10) d'une seconde paroi latérale parmi les deux parois latérales (2) est un métal ferromagnétique ou un aimant permanent de polarité opposée par rapport à l'aimant permanent de la première paroi latérale parmi les deux parois latérales (2), dans lequel le fond de sac (3) est formé par un accouplement (4) avec lequel les parois latérales (2) sont reliées entre elles de manière amovible, dans lequel chaque paroi latérale (2) présente une moitié d'accouplement parmi deux moitiés d'accouplement (5, 6) de l'accouplement (4), **caractérisé en ce que** le sac présente en outre un mécanisme de réglage (7) par l'intermédiaire duquel l'accouplement (4) peut être réglé entre une position de verrouillage, dans laquelle les moitiés d'accouplement (5, 6) sont fixées l'une à l'autre, et une position de libération, dans laquelle les moitiés d'accouplement (5, 6) sont détachées l'une de l'autre, dans lequel les moitiés d'accouplement (5, 6) présentent respectivement au moins l'un des éléments magnétiques (8, 9, 10), **caractérisé en ce que** les éléments magnétiques (8, 9, 10) peuvent être réglés les uns par rapport aux autres par l'intermédiaire du mécanisme de réglage (7) et sont encore plus rapprochés l'un de l'autre dans la position de verrouillage par rapport à la position de libération, dans lequel le mécanisme de réglage (7) présente au moins un coulisseau magnétique (11) sur lequel est disposé l'au moins un élément magnétique (8, 9, 10), de préférence un aimant permanent, de l'une des deux moitiés d'accouplement (5, 6), dans lequel une distance dudit élément magnétique (8, 9, 10) par rapport à l'au moins un élément magnétique (8, 9, 10) de l'autre moitié d'accouplement (5, 6) peut être réglée au moyen du coulisseau magnétique (11), dans lequel au moins la moitié d'accouplement (5, 6) présentant le coulisseau magnétique (11) s'étend le long de la largeur du fond de sac (3), dans lequel le coulisseau magnétique (11) dépasse de la moitié d'accouplement (5, 6) dans le sens de la largeur par une extrémité d'actionnement (14).

2. Sac (1) selon la revendication 1, dans lequel les moitiés d'accouplement (5, 6) présentent respectivement au moins un élément magnétique (8, 9, 10), de préférence un aimant permanent, qui sont polarisés de la même manière et qui, dans la position de libération, sont encore plus rapprochés l'un de l'autre par rapport à la position de verrouillage et sont de préférence disposés en vis-à-vis avec leurs mêmes pôles.

3. Sac (1) selon l'une des revendications précédentes, dans lequel le coulisseau magnétique (11) présente en outre un crochet (12) ou un logement pour crochet (13) en contre-dépouille de manière complémentaire au crochet qui peut être réglé avec le coulisseau magnétique (11) entre la position de verrouillage et la position de libération.

4. Sac (1) selon l'une des revendications précédentes, dans lequel l'accouplement (4) présente deux coulisseaux magnétiques (11) qui, aux extrémités du fond de sac (3) opposées dans le sens de la largeur du fond de sac (3), font saillie, dans le sens d'extension opposé avec leur extrémité d'actionnement (14) respective, hors de la même moitié d'accouplement (5, 6) ou de moitiés d'accouplement différentes.

5. Sac (1) selon l'une des revendications précédentes, dans lequel une face frontale extérieure de l'extrémité d'actionnement (14) présente un contour d'avancement (15) qui monte à l'encontre d'un sens de transport (x) prévu du sac (1).

6. Sac (1) selon l'une des revendications précédentes, dans lequel le coulisseau magnétique (11) est logé dans un boîtier (16) de la moitié d'accouplement (5, 6) présentant le coulisseau magnétique (11) et est dégagé au moins en partie vers un logement à complémentarité de forme (17) destiné à recevoir l'autre moitié d'accouplement (5, 6).

7. Sac (1) selon la revendication l'une des revendications précédentes, dans lequel un coulisseau magnétique (11) de l'accouplement (4) au niveau du fond de sac (3) limite un logement à complémentarité de forme (17) d'une première moitié d'accouplement (5, 6) de l'accouplement (4) par rapport à un sens d'insertion d'une seconde moitié d'accouplement (5, 6) de l'accouplement (4) dans le logement à complémentarité de forme (17) au niveau d'une extrémité arrière (18) du logement à complémentarité de forme, de sorte que la seconde moitié d'accouplement (5, 6) est rapprochée au maximum du coulisseau magnétique (11) dans sa position entièrement insérée dans le logement à complémentarité de forme (17).

8. Sac (1) selon l'une des revendications précédentes, dans lequel le mécanisme de réglage (7), de préférence un coulisseau magnétique (11) du mécanisme de réglage (7), sur lequel est disposé l'au moins un élément magnétique (8, 9, 10) de l'une des deux moitiés d'accouplement (5, 6), présente, dans la position de libération, une précontrainte mécanique en direction de la position de verrouillage.

9. Sac (1) selon l'une des revendications précédentes, dans lequel l'accouplement (4) présente une section de mise en prise par complémentarité de forme (19) dans laquelle les deux moitiés d'accouplement (5, 6) viennent en prise l'une dans l'autre avec des contours complémentaires l'un de l'autre, dans lequel la section de mise en prise par complémentarité de forme (19) est disposée entre le mécanisme de réglage (7) et les parois latérales (2).

10. Sac (1) selon la revendication 9, dans lequel la section de mise en prise par complémentarité de forme (19) présente une rainure (20) s'étendant dans le sens de la largeur du fond de sac (3) sur une première moitié d'accouplement parmi les deux moitiés d'accouplement (5, 6) et un ressort (21) s'étendant dans le sens de la largeur du fond de sac (3) et venant en prise dans la rainure (20) dans la position de verrouillage sur l'autre moitié d'accouplement parmi les deux moitiés d'accouplement (5, 6).

11. Sac (1) selon la revendication 7 ou 8, dans lequel les moitiés d'accouplement (5, 6) s'étendent, pour la fourniture de la mise en prise par complémentarité de forme, sensiblement sur toute la largeur du fond de sac (3) et le mécanisme de réglage (7), y compris une extrémité d'actionnement (14) avec laquelle le coulisseau magnétique (11) dépasse de la moitié d'accouplement (5, 6) dans le sens de la largeur, fait saillie dans le sens de la largeur, de sorte qu'un côté d'appui pour l'accouplement (4) est créé sur une face inférieure (22) de la section de mise en prise par complémentarité de forme (19), laquelle face inférieure est tournée vers l'extrémité d'actionnement (14).

12. Agencement constitué d'un sac (1) selon l'une des revendications précédentes et d'un moyen d'entraînement de sac (203), dans lequel l'au moins un élément magnétique (8, 9, 10) de l'une des deux moitiés d'accouplement (5, 6) est un aimant permanent qui, avec son pôle par lequel il est opposé à l'élément magnétique (8, 9, 10) de l'autre moitié d'accouplement (5, 6), est tourné vers une face extérieure de boîtier (23) des moitiés d'accouplement (5, 6) qui lui sont associées, de sorte que le sac (1) peut être entraîné par l'intermédiaire d'un moyen d'entraînement de sac (203) magnétique accouplé à la face extérieure de boîtier (23).
